# EUROPEAN PATENT SPECIFICATION

(11) **EP 1 221 818 B1**
(45) Date of publication and mention of the grant of the patent: **26.10.2005**
(21) Application number: 01310280.1
(22) Date of filing: 10.12.2001
(51) Int. Cl.: H04Q 3/00, H04L 12/24, H04L 29/06, H04L 29/08

(54) **Provision of services in a communication system**
Bereitstellen von Diensten in einem Kommunikationssystem
Provision de services dans un système de communication

(30) Priority: 05.01.2001 GB 0100309
(43) Date of publication of application: 10.07.2002
(73) Proprietor: Nokia Corporation, 03260 Espoo (FI)
(72) Inventor: Bouret, Christophe, 00160 Helsinki (FI); Kuismanen, Pekka, 00250 Helsinki (FI); Lönnfors, Mikko, 00550 Helsinki (FI)
(74) Representative: Ruuskanen, Juha-Pekka

(56) References cited:
- EP-A- 0 810 799
- WO-A-00/69140
- WO-A-01/28186

## Description

### Field of the Invention

The present invention relates to provision of services in a communication system, and in particular, but not exclusively, to services provided by third party service providers over a data network.

### Background of the Invention

Communication systems are known by a skilled person. A communication system may provide the user, or more precisely, user equipment or terminal, with connection-oriented communication services and/or connectionless communication services. An example of the first type is a circuit switched connection where a circuit is set-up with call set-up and admission control. An example of the connectionless communication services is a packet switched service. A more specific example of the connectionless communication protocol service is the Internet Protocol (IP).

Both of the circuit switched and the packet switched services can be used for communicating packet data. Packet data services can be defined in general as services that are capable of transporting data units (data packets or similar data entities of fixed or variable length) between two signalling points, such as between two terminals or other nodes of the communication system. In this specification the term data network refers to any network that is capable of transporting data between two or more nodes. The data network may be any communication network and may be based on use of a fixed line or wireless communication media.

In a communication system various services may be provided for various clients. For example, a service provider is typically needed for the provision of the data communication services. This service provider may be e.g. an Internet Service Provider (ISP). The provider of the data communication services may be the network operator who runs the physical network.

The service provider may also be an external service provider. These are also sometimes referred to as 3^{rd} party service providers. An external service provider is typically a service provider who is independent from the network operator. The external service providers may provide different types of value added services. The service providers of such services are sometimes referred to as value added service providers (VASP).

Value added services may be used by the end users of the communication network. The end users may use services such as entertainment services, information services or services that relate to the connections. The connection related services comprise services such as for example conference calls, call forwarding, call back and other intelligent network services. The network operators may also wish to use value added services e.g. for call control and management functions, such as for call routing, charging and so on. Thus a reference to a user or client of a service shall be understood to mean both the internal clients in the network (e.g. any element, application or function of the network) and clients such as the end users (subscribers and other users connected to the network).

A corresponding service may be provided by more than one service provider. Thus the clients may be provided with a possibility to choose between different service providers. The service providers may be enabled to compete against each other.

In the future the profitability and/or even survival of a service provider may depend heavily on how successful the service provider has been in differentiating his services from the services provided by the other service providers. It is likely that there will not be any 'killer service'. That is, a service will probably not appeal to all clients such that all clients would necessarily want to use it.

Therefore it could be advantageous if a client could easily choose between the different services the client wishes to use. However, the inventors have found that at the present there appears to be no appropriate technical solution for enabling differentiation of a service provider from other service providers.

A prior art solution for the 3^{rd} party service provision is based on use of the so called Parlay model. The Parlay model is based on specifications by the Parlay Group. The Parlay Group is a non-profitable consortium The Parlay Group is an organisation that has been formed to make creation of communication applications by specifying and promoting open Application Programming Interfaces (APIs) which may be used for intimately link different telecommunications applications. A parlay framework shall be understood to refer to a collection of APIs that are employed to support authentication and service discovery procedures between the client willing to use the service and the service provider.

In a telecommunications network operating in accordance with the Parlay model the network operator provides (i.e. offers and sells) network services to 3^{rd} party service providers. The offered services may consist of call management services such as call control, user location, charging and so on. The 3^{rd} party service providers may then use these services to provide advanced service applications to their clients. The clients may be e.g. end-users of the telecommunications network or network operators itself.

However, the Parlay model and framework constructed in accordance with the Parlay model does not fit very well for use in data communication systems. This is especially so in systems that enable transportation of packet data. An example of such a system is based on a IP (Internet Protocol). The service interfaces provided by the Parlay framework are substantially complex. This may further limit the usefulness of the Parlay model in the IP based service provision.

It has been suggested that open interfaces that based on distributed object techniques could be used for the service provisioning. The open interfaces could be based on the CORBA (common object request broker architecture) data transportation standard. In accordance with the CORBA the network protocols used by the carrier network are not necessarily visible for the external service providers. Thus the value added service providers may use the open interfaces for the service provisioning. For example, in the current intelligent network (IN) architecture for mobile communication, the interface between the network controller and an external service control point (SCP) may be based on a protocol such as the intelligent network application protocol (INAP) or the customised applications for mobile network enhanced logic (CAMEL) application part (CAP) protocol. If the open CORBA (common object request broker architecture) interface is employed, the CORBA interface will hide the INAP or CAP protocol from the external service providers. The interfaces need to be defined for each service by the operator. The interfaces must also be mapped to the interface protocol (e.g. INAP).

WO 00/69140 discloses a distributed system to intelligently establish sessions between anonymous users over various networks. EP 0810799 discloses an arrangement for facilitating plug-and-plug call features.

A more feasible provision of a wide range of different services to different client groups should be enabled. In addition to this, the inventors believe that time periods available for creation, introduction and marketing of new services will in the future become shorter than what they are at the present. To enable fast service creation and real competition between various external service providers, it should be possible that in addition to the network operators (for example the ISPs) as many service providers as possible may provide services for the different types of clients.

However, in the arrangements that are based on the present protocols such as the CORBA the network interfaces are typically "frozen" so as to make the changes thereof difficult and in some instances even impossible. Thus the prior art interfaces, such as those based on the CORBA may be too slow, inflexible and hard to change to meet one or more of the above mentioned requirements.

The 3^{rd} party service providers may also wish to advertise their services to potential clients such as the network operators so that the clients may then select and use one or more of these services. However, the present service interfaces do not necessarily enable this. In addition, the interfaces are not standardised. Therefore it is difficult, if not impossible for the external service providers to advertise their service capabilities for the potential clients.

### Summary of the Invention

Embodiments of the present invention aim to address one or several of the above problems.

According to one aspect of the present invention, there is provided a method for providing services for clients associated with a data communication network, said services being provided by at least one external service provider, and wherein clients may request for a service from an interface entity, the requests are processed by the interface entity to find a matching service from services registered therein, and if a matching service is found, said service is requested from an external service provider providing said service by communicating a message to said external service provider based on a protocol that enables initiation of a service provisioning session, the method comprising steps of broadcasting from said at least one external service provider offers that associate with services to an interface entity associated with the data network, processing the broadcast offers at the interface entity in order to make a decision regarding the acceptance of the offers, including accepted services into the register of services that are available for the clients, and establishing all interfaces required for providing the service connection based on information communicated by means of said protocol.

According to another aspect of the present invention there is provided a service interface arrangement for a data network, comprising an interface for receiving information regarding services that are offered by at least one external service provider, said services being for use by clients associated with the data network, a register for services provided by at least one external service provider, request means for processing a request for a service by a client, said request means being arranged to look for a service that matches the request from the register and, if a matching service is located, to request for said service from an external service provider providing said service, wherein the request means are arranged to communicate with said external service provider based on a protocol that enables initiation of service provisioning, the arrangement being arranged to discover services from broadcast service advertisement messages, and further comprising selection means for selecting services to be available for the clients based on offers broadcast by at least one service provider, and agreement means for processing agreements between the data network and said at least one external service provider broadcasting offers for services.

In a preferred embodiment the protocol enables service provisioning such that no beforehand knowledge of interfaces between the interface entity and said external service provider are required. Instead, the interfaces may be established based on information that is communicated between the interface entity and the service provider based on said protocol.

The embodiments of the invention may enable network operators to provide multiple advanced services. The network operators may be enabled to more easily provide a wide variety of different and even competing services without being required to generate and/or maintain these services. The network operators may choose to buy and host any number of services which are available from the external service providers and which the operators consider to be worth offering. The external service providers may be enabled to more freely to create and innovate new services and to offer these new services for the network operators. In addition, the network operators may use external services for connection management operations such as charging and intelligent network services. In addition, the embodiments may provide a secure way to access services that are provided by external service providers.

### Brief Description of Drawings

For better understanding of the present invention, and how the invention can be put into effect, reference will now be made by way of example to the accompanying drawings in which:
Figure 1 shows one embodiment of the present invention; and
Figure 2 is a flowchart illustrating the operation of one embodiment of the present invention.

### Description of Preferred Embodiments of the Invention

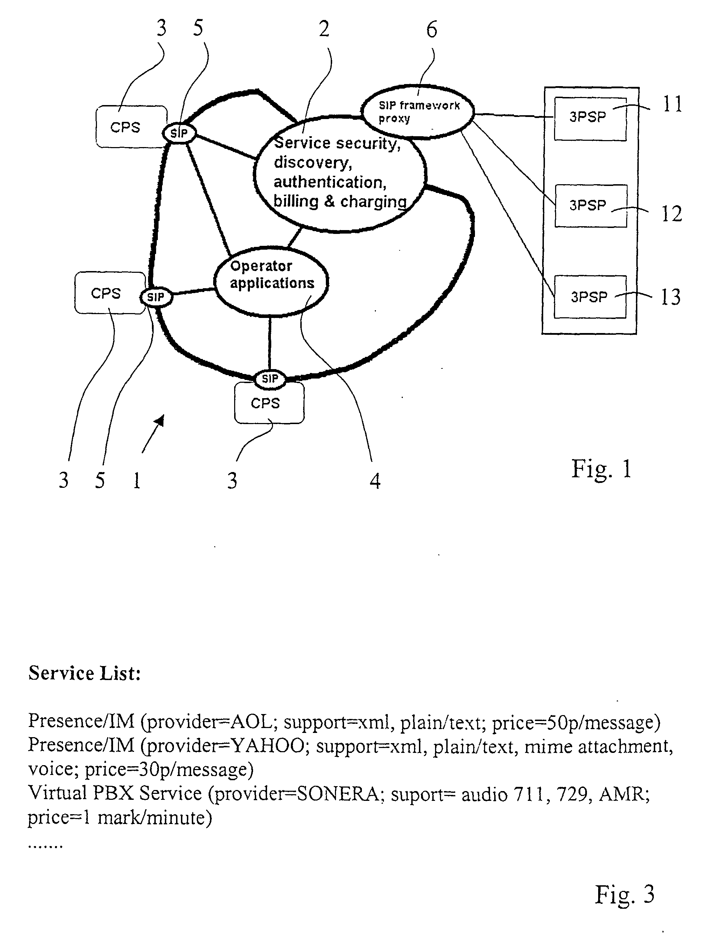

Figure 1 shows a data communication network 1 that is run by a network operator. It shall be understood that the operator cannot typically be represented as an any specific entity of the network but is rather to be understood to be an entity or organisation that has the overall management responsibility of the network. The operator typically is the organisation or similar entity owning the network apparatus and selling access rights to the end users.

In the following examples the network operator is assumed to be an Internet service provider (ISP). The value added services by the external service providers are assumed to be provided for use in an all-IP environment.

The embodiments are based on a concept that enables a network operator to contract services from 3^{rd} party i.e. external value added service providers (VASPs) 11 to 13. The 3^{rd} party value added service providers (VASPs) 11 to 13 may be entities such as application service providers (ASP) and organisations such as private companies or public authorities. The private companies may be organisations such as banks, insurance companies or any other instances capable and willing to offer services to clients.

The embodiments may be based on specifications by Parlay Group. However, due to the above discussed reasons the Parlay model may not be directly suitable as such for the 3^{rd} party service provisioning. Thus certain changes are needed to adapt the present Parlay model to be suitable for operation in accordance with the present invention. More particularly, some changes are required in order to adapt the Parlay model to fit better to the IP based model of data communications and to the manner services are provided on an IP based network.

The basic concept of the Parlay model needs to be changed such that the network operator operating the network 1 is enabled to buy services from the 3^{rd} party service providers 11 to 13. This is an inverted model of operation to the present situation. In the present models of operation the 3^{rd} party service providers need to register and pay for the use of the services provided by the network operator. In other words, the embodiments enable the 3^{rd} party service provider to take initiative in the provision of advanced services.

Function blocks of a preferred embodiment of the invention are presented in Figure 1. The framework 2 of the communication network 1 is adapted to provide various services for the users thereof. In this context the term service refers to a service or service component provided by any of the 3^{rd} party providers 11 to 13. The term user of the service refers to any client who may use the service in the network side. The user may be a service or functionality provided by the network operator or a network entity in one of the domains of the network operator. An example of such a user is a call processing server (CPS) 3.

In the service architecture of Figure 1 an operator application of a plurality of operator applications 4 may be adapted to run on top of a session initiation protocol (SIP) application server 5. A session initiation protocol is a network level protocol that can be used for transporting information between two nodes in a communication system. In operation, a session initiation protocol enables transportation of information between two nodes without need to have any information and/or definitions regarding the interfaces between the nodes. The session initiation protocol may be used solely for carrying information between the nodes. The nodes may then establish necessary interfaces and operate based on the information transported by means of the session initiation protocol, if this is required.

The inventors have found that it is possible to use session initiation protocol type signalling for the creation of the necessary interfaces towards the external service providers instead e.g. of using a transport protocol, such as the CORBA, for this purpose. An advantage of using a session initiation protocol instead of a transport protocol is that no predefined information regarding the interfaces is required at this stage but the interfaces may be created based on information signalled between the client and the service. For example, in the CORBA the designer of a new service has to know the interface definitions beforehand, i.e. at the time of creating the new service.

The use of session initiation protocol may thus facilitate a more flexible and faster provision of new services since it is not necessary to define and/or map the interface beforehand. The session initiation protocol is advantageous also in that by means of it is possible to establish a point-to-point like connection for a connectionless packet switched communication after the message has been received at the receiving end of the signalling. The message may define all necessary interfaces and/or protocol required for the connection.

Since it is possible to transport any necessary information by means of the session initiation protocol messaging, the embodiments also enable conversion of a 3^{rd} party service to be suitable for use in a particular carrier network which may have some specific requirements. By means of this a value added service provider may offer the same value added service to different operators running differently designed networks.

The Parlay framework 2 can be seen as a collection of application programming interfaces (API). The APIs are typically used to provide functions such as authentication, service discovery and service agreement signing. The framework 2 may be employed to support authentication and service discovery between the client applications 4 and service providers 11 to 13. The framework 2 is adapted to build a standard and secure environment for the external 3^{rd} party service providers 11 to 13 and users 3 of the services to communicate information regarding the services. The communication may comprise information associated with operations such as making service contracts or charging.

The framework 2 is preferably adapted to provide interface functions such as service availability broadcasting, service lookup, service discovery, authentication capability, billing and charging capability, firewall, gateway and so on. These functions will be briefly discussed in the following.

The 3^{rd} party service providers may wish to advertise their services and service capabilities to network operators. The service availability broadcast function and the service lookup can be used for enabling this. By means of the broadcasting service the service providers may e.g. broadcast notifications regarding the services they offer so that the notification are "pushed" to different network operators. After a network operator has received the broadcast notification it may then select and use one or more of the advertised services.

A service discovery interface may be adapted to enable the network operator or any other carrier network service provider to listen the broadcast notifications advertising the available services. The service discovery interface may be adapted to enable the network operator to discover all broadcast services or service capabilities. The interface may also be adapted to discover only those services or capabilities the network operator is interested in.

In a preferred operation model the service discovery interface is always in an active state. That is, the interface may receive broadcast service advertisements at any time. However, it is also possible to restrict the active time periods and/or to selectively switch the discovery interface between 'on' and 'off' modes in accordance with the needs of the operator.

The network operator may also generate and transmit a request for a certain service or for a certain type of service capability. The request may be transported to a specific 3^{rd} party service provider or providers or broadcast to all service providers. These requests may also be signalled based on the session initiation protocol. More particularly, the request may be transported based on the request forwarding feature of the session initiation protocol.

According to a possibility the framework may use a register function provided by the session initiation protocol (SIP) to enable the 3^{rd} party service providers to advertise themselves to the operator network. Security and authentication functions provided by the session initiation protocol may also be used. The session initiation protocol (SIP) message register may be physically located e.g. in the interface entity or framework 2. However, the register may also be provided elsewhere in the system, such as in the proxy server 6.

The decision procedure after the network operator has discovered a service it wishes to use for the functions of the network, or to offer to the users of the network, may be automated, semi-automated or manual. For example, if a function of the network is temporarily overloaded or out or order, a management function responsible for the operation of said function may trigger purchase of a replacement service from a 3^{rd} party service provider. In manual operation the staff of the network operator reviews the list and manually selects one or several services for use by the internal or external clients.

The operator is enabled to sign an agreement regarding the services. Billing & charging interfaces can be provided between the external service providers and the network. The billing and charging interfaces may be utilised when a service usage agreement is signed. More particularly, the billing and charging interfaces are arranged such they enable the external i.e. 3^{rd} party service providers and service users to make contracts regarding e.g. the price of the service usage, conditions and/or required certifications.

In order to provide secure service provisioning, a mutual authentication is preferably performed between the operator and the service provider. The authentication procedure may be initiated by the party contacting the other party. A specific authentication interface may be used to enable all parties involved in the service provisioning to authenticate each other. The authentication may be based on any appropriate technique, such as use of public or private keys. An example of the public keys is the so called PGP key system.

A service firewall/gateway interface may also be provided for improved security.

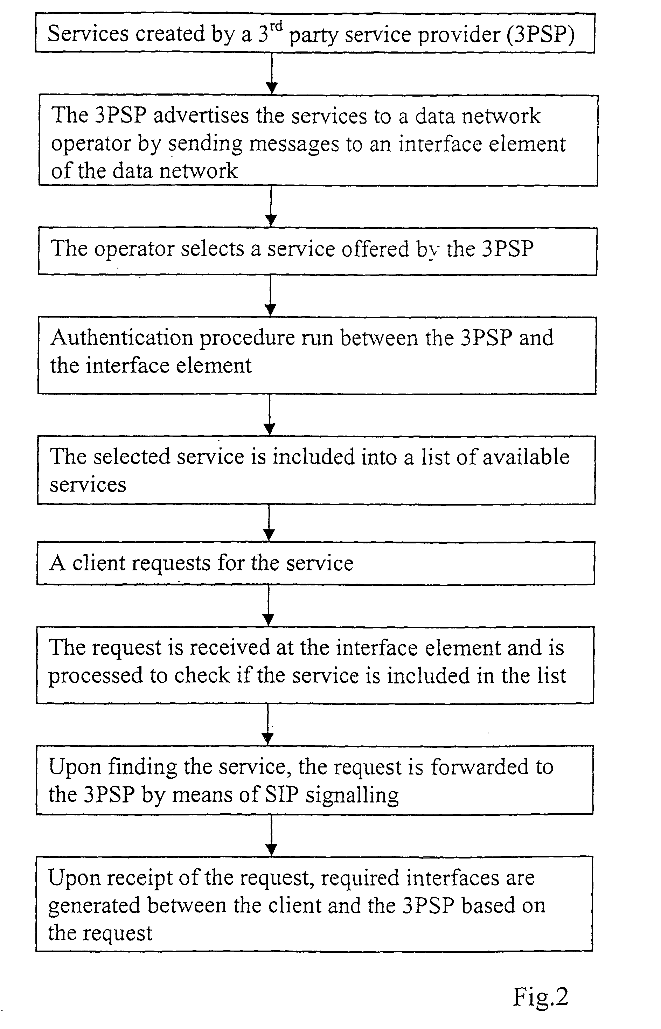

The following will describe with reference to the flowchart of Figure 2 the operation of the Figure 1 embodiment in more detail. Each of the 3^{rd} party service providers 11 to 13 may "register" the services at a proxy server 6 of the SIP framework 2. The registration can be requested simply by sending an appropriate message to the proxy server 6. The register function may be implemented based on SIP registering features. As described above this message may be broadcast to several operators.

The registering message includes a description of the service (or several services) the 3^{rd} party service provider wants to offer. If the operator decides to use the service offered by provider 11, it may contact the service provider 11 by means of a SIP message. An authentication procedure between the service provider 11 and the framework 2 is subsequently initiated. If an agreement is to be made between the 3^{rd} party provider 11 and the operator of the framework 2, a service agreement may then be signed between the 3^{rd} party provider and the operator.

If the registration procedure was successful, the 3^{rd} party services are then entered into a service list. Figure 3 illustrates a possible service list including three services. As shown, the list may indicate the name of the service, the identity of the service provider, application specific data as well as price information and so on.

The service list may be maintained by the framework 2. Alternatively the service list may be maintained by the proxy server 6. After the entrance to the list the 3^{rd} party services are available for the users of the network in a similar manner as they were provided by the elements implemented within the network. The users may not necessarily become aware that the services are indeed provided by an external service provider.

When an application user or another client wishes to use a service on the list, the user initiates the use by routing a service request to the framework 2. The request processed so as to find a matching registered service that is offered by a 3^{rd} party service provider. When a matching service is found, a service agreement (billing and charging) may be signed with the framework operator or alternatively directly with the 3^{rd} party provider, depending the application. The request (e.g. a SIP message) is then routed to the 3^{rd} party application server.

When a user of an application wants to use a service provided by an external service provider, a SIP message may be first routed to a proxy server 6 of the framework. In this case the framework proxy server 6 processes the SIP message and looks for an appropriate 3^{rd} party service provider. After an appropriate provider is found the proxy server 6 may contact the service provider. The message may be forwarded directly to the service provider. The message may also be forwarded to a proxy server of the 3^{rd} party service provider. The proxy server can be used to provide firewall and/or gateway functions and to open a route through a firewall.

In the following it is assumed that an external service provider has advertised a service, the offer has been accepted by a network operator, and that the service has already been registered as available to clients in the network operator network. The actual service provisioning operation that follows these steps may be provided in the following manner.

The step of finding a matching service is initiated by a request from a client for a service. The request may include an identity for the requested service or the request may specify properties for desired service, such as purpose and/or price of the service and so on. Thus said matching of the client request to the registered services can be for service identity or for service properties, or even both, if several alternative services exist with the same identity.

When the matching has been performed, there exist several options for the manner how the client may use the service. In the simplest case there is one request from the client to the service provider (maybe via the framework i.e. framework 2 or framework proxy 6). An application may be executed in the service provider entity (i.e. one of the service providers 11 to 13) and a response is provided to the client from the service provider entity. The response may be communicated via the network.

In more complicated cases an association can be defined between the client and the service obtained by the step of finding a matching service. The association means that the client or the service can later on initiate a service session between the client and the service (within the service provider entity without the need for the step of finding a matching service.

The service association can be defined, for instance, so that a service reference to the service is stored by the client. By means of this the client may contact directly the service without the need for finding the service by the matching operations. Despite this the contacting operations may be performed via the framework.

The service association can be defined, for example, in the form of trigger data stored to a subscriber register of the network, such as the UMTS HSS (home subscriber server) or HLR (home location register). The trigger data will indicate for call processing servers the points in call or session processing in which a request for the service must be issued. In Figure 1 the service association may be created between any of the call processing servers 3 acting as a client and any of the services provided by one of the service provider entities 11 to 13.

The processing of the service advertisement, agreements, service registry, authentication and service requests may implemented by means of an external service provision function provided in the framework. The function may be provided by means of a service controller entity provided in the core network side of a mobile communication network. The service controller entity may be provide by means of the above referred SIP framework 2 or proxy server 6.

It should be appreciated that whilst in the above embodiments the data is assumed to be in packet form, in alternative embodiments of the invention the data may be transported in any suitable format. It is also noted that the above disclosed solution is applicable to any network architecture (connectionless or connection-oriented), underlying transport protocol (fixed-length or variable-length data units) or transport technology (wired or wireless). In general, the embodiments may be implemented independently of the type of the used transport protocol.

The embodiments of the present invention have been described above with reference to the session initiation protocol. It shall be appreciated that other protocols may also be used for some or all messaging between the clients, the interface entity and the 3^{rd} party service provider where appropriate. The requirement in this context is that the selected protocol is capable of transporting a message between the interface entity associated with the data carrier network and external service provider without any detailed knowledge of the interface between the nodes. That is, the protocol has to be selected such that it is not necessary to define the interfaces between the two nodes beforehand, but the interfaces can be established based on the information included in the message.

For example, at least a part of the messaging may be based on use of the HyperText Transfer Protocol (HTTP) or the Simple Object Activation Protocol (SOAP). From these two examples the HTTP is a protocol known from the IP based networks. The format of the HTTP messages is based on HyperText Markup Language (HTML). The SOAP is a protocol that uses typed serialisation format. The SOAP uses HTTP for the transportation of its request/response messaging. The SOAP message format is based on Extensible Markup lanquage XML. The SOAP was initially indented for use in the object Remote Procedure Call (RCP) technologies like the CORBA or COM.

The embodiments of the present invention have been described in the context of an IP based system. This invention is also applicable to any other data communication systems. Examples of data networks, without limiting this disclosure to these, include ATM (Asynchronous Transfer Mode) and Local Area Networks (LAN).

Examples of communication networks that are capable of providing wireless services, such as IP (Internet Protocol) or ATM/AAL2 (Asynchronous Transfer Mode/ATM Adaptation Layer type 2) based packet data transmissions, include, without limiting to these, the GSM (Global System for Mobile communications) based GPRS (General Packet Radio Service) network, EDGE (enhanced data rate for GSM evolution) Mobile Data Network and third generation telecommunication systems such as the CDMA (code division multiple access) or TDMA (time division multiple access) based 3^{rd} generation telecommunication systems that are sometimes referred to as Universal Mobile Telecommunication System (UMTS), and IMT 2000 (International Mobile Telecommunication System 2000) as well as the SDMA (space division multiple access) systems. All these relate to the transfer of data to and from user equipment providing the user thereof with a wireless interface for the data transmission.

The embodiments may provide service interfaces that are simpler than the ones provided by the current Parlay model and/or CORBA. Interfaces may comply better with the client/server model of the various Internet applications. Use of the interfaces may not require support for transactions or capability to hold a transaction state. This may make the services scale better. In addition, introduction of new services is made easier by using already existing protocols, for example the Session Initiation Protocol (SIP), HyperText Transfer Protocol (http) or soap.

It is also noted herein that while the above describes exemplifying embodiments of the invention, there are several variations and modifications which may be made to the disclosed solution without departing from the scope of the present invention as defined in the appended claims.

## Claims

1. A method for providing services for clients (3) associated with a data communication network (1), said services being provided by at least one external service provider (11 to 13), and wherein clients may request for a service from an interface entity (2, 6), the requests are processed by the interface entity to find a matching service from services registered therein, and if a matching service is found, said service is requested from an external service provider (11 to 13) providing said service by communicating a message to said external service provider based on a protocol that enables initiation of a service provisioning session, the method being **characterised by** comprising:
broadcasting from said at least one external service provider offers that associate with services to an interface entity (2, 6) associated with the data network;
processing the broadcast offers at the interface entity in order to make a decision regarding the acceptance of the offers;
including accepted services into the register of services that are available for the clients (3); and
establishing all interfaces required for providing the service connection based on information communicated by means of said protocol.

2. A method as claimed in claim 1, wherein said protocol comprises a session initiation protocol, SIP.

3. A method as claimed in claim 1, wherein said protocol comprises HyperText Transfer Protocol, HTTP.

4. A method as claimed in claim 1, wherein said protocol comprises Simple Object Activation Protocol, SOAP.

5. A method as claimed in any preceding claim, wherein the at least one external service provider (11 to 13) offers the services based on said protocol.

6. A method as claimed in any preceding claim, wherein the offers are broadcast to be received by interface entities of at least two data networks.

7. A method as claimed in any preceding claim, wherein an authentication procedure is accomplished between the interface entity (2, 6) of the data network (1) and the external service provider (11 to 13).

8. A method as claimed in claim 1, wherein said information is communicated between the interface entity (2, 6) and the external service provider (11 to 13) without any beforehand defined interfaces for the service provisioning.

9. A method as claimed in any preceding claim, comprising a step of modifying the requested service to be suitable for use in the data network based on information communicated by means of said protocol.

10. A method as claimed in any preceding claim, wherein at least one of the clients (3) comprises an application that is internal for the data network (1).

11. A method as claimed in any preceding claim, wherein at least one of the services comprises a call management service.

12. A method as claimed in any preceding claim, wherein at least one of the clients (3) comprises an end user of the data network (1).

13. A method as claimed in any preceding claim, wherein the services are provided based on a model that is modified from a model defined by the Parlay Group.

14. A method as claimed in any preceding claim, wherein a service discovery interface of the interface entity (2,6) monitors for offers by the external service providers.

15. A method as claimed in claim 14, wherein the service discovery interface discovers only selected offers.

16. A method as claimed in any preceding claim, wherein the interface entity (2,6,) sends an inquiry for a service to at least one external service provider (11 to 13).

17. A method as claimed in claim 16, wherein the inquiry is broadcast to possible service providers.

18. A method as claimed in any preceding claim, wherein the offers by the external service providers are registered in a register function.

19. A method as claimed in any preceding claim, wherein a charging interface (6) of the interface entity is employed for signing of a service usage agreement.

20. A method as claimed in any preceding claim, wherein the interface entity comprises a plurality of application programming interfaces.

21. A method as claimed in any preceding claim, wherein the data network (1) is adapted to communicate packet data.

22. A method as claimed in any preceding claim, wherein the communication in the data network (1) is based on the Internet Protocol, IP.

23. A method as claimed in any preceding claim, wherein the operator of the data network (1) pays for the use of at least one service offered by the at least one external service provider (11 to 13).

24. A method as claimed in any preceding claim, wherein a point-to-point like connection is established based on information communicated by means of said protocol.

25. A service interface arrangement for a data network (1), comprising:
an interface (2,6) for receiving information regarding services that are offered by at least one external service provider (11 to 13), said services being for use by clients (3) associated with the data network;
a register (2,6) for services provided by at least one external service provider;
request means (2,6,) for processing a request for a service by a client, said request means being arranged to look for a service that matches the request from the register and, if a matching service is located, to request for said service from an external service provider (11 to 13) providing said service, wherein the request means are arranged to communicate with said external service provider based on a protocol that enables initiation of service provisioning, the arrangement being **characterised in that**
it is arranged to discover services from broadcast service advertisement messages, and **in that** it comprises
selection means (2,6) for selecting services to be available for the clients (3) based on offers broadcast by at least one service provider (11 to 13); and
agreement means (2,6) for processing agreements between the data network and said at least one external service provider (11 to 13) broadcasting offers for services.

26. A service interface arrangement as claimed in claim 25, comprising means (6) for processing authentication procedures between the data communication network (1) and the external service provider (11 to 13).

27. A service interface arrangement as claimed in claim 25 or 26, wherein the protocol is such that the service provisioning can be initiated without need to define beforehand specific interfaces for said service provisioning.

28. A service interface arrangement as claimed in any of claims 25 to 27, wherein said protocol is selected to be one of the following: a session initiation protocol, SIP; HyperText Transfer Protocol, HTTP; Simple Object Activation Protocol, SOAP.

29. A service interface arrangement as claimed in any of claims 25 to 28, wherein the data network (1) comprises a packet switched data network.

30. A service interface arrangement as claimed in any of claims 25 to 29, wherein the interface entity (2) comprises a plurality of application programming interfaces.

31. A service interface arrangement as claimed in any of claims 25 to 30 adapted to provide at least one of the following interface functions: service availability broadcasting; service lookup; service discovery; authentication; billing and/or charging; firewall; and/or gateway.

## Patentansprüche

1. Verfahren zum Bereitstellen von Diensten für mit einem Datenkommunikationsnetzwerk (1) assoziierte Klienten (3), wobei die Dienste durch zumindest einen externen Dienstanbieter (11 bis 13) bereitgestellt werden, und wobei Klienten einen Dienst von einer Schnittstelleneinrichtung (2, 6) anfordern können, die Anforderungen durch die Schnittstelleneinrichtung zum Finden eines übereinstimmenden Diensts aus in ihr registrierten Diensten verarbeitet werden, und wenn ein übereinstimmender Dienst gefunden wird, der Dienst von einem externen den Dienst anbietenden Dienstanbieter (11 bis 13) angefordert wird, indem zu dem externen Dienstanbieter eine Nachricht auf der Grundlage eines Protokolls bereitgestellt wird, das ein Ingangsetzen einer Dienstbereitstellungssitzung ermöglicht, wobei das Verfahren **dadurch gekennzeichnet ist, dass** es umfasst:
Rundsenden von mit Diensten assoziierten Angeboten von dem zumindest einen externen Dienstanbieter zu einer Schnittstelleneinrichtung (2, 6), die mit dem Datennetzwerk assoziiert ist,
Verarbeiten der Rundsendungsangebote bei der Schnittstelleneinrichtung zum Treffen einer Entscheidung hinsichtlich der Akzeptanz der Angebote,
Einfügen akzeptierter Dienste in das Register von Diensten, die für die Klienten (3) verfügbar sind, und
Einrichten aller zum Bereitstellen der Dienstverbindung erforderlichen Schnittstellen auf der Grundlage von mittels des Protokolls mitgeteilten Informationen.

2. Verfahren gemäß Anspruch 1, wobei das Protokoll ein Sitzungsingangsetzungsprotokoll, SIP ("session initiation protocol"), umfasst.

3. Verfahren gemäß Anspruch 1, wobei das Protokoll das HyperText-Transfer-Protokoll, HTTP, umfasst.

4. Verfahren gemäß Anspruch 1, wobei das Protokoll das Simple-Object-Activation-Protokoll, SOAP, umfasst.

5. Verfahren gemäß einem der vorstehenden Ansprüche, wobei der zumindest eine Dienstanbieter (11 bis 13) die Dienste auf der Grundlage des Protokolls anbietet.

6. Verfahren gemäß einem der vorstehenden Ansprüche, wobei die Angebote zum Empfang durch Schnittstelleneinrichtungen von zumindest zwei Datennetzwerken rundgesendet werden.

7. Verfahren gemäß einem der vorstehenden Ansprüche, wobei eine Authentifizierungsprozedur zwischen der Schnittstelleneinrichtung (2, 6) des Datennetzwerks (1) und dem externen Dienstanbieter (11 bis 13) durchgeführt wird.

8. Verfahren gemäß Anspruch 1, wobei die Informationen zwischen der Schnittstelleneinrichtung (2, 6) und dem externen Dienstanbieter (11 bis 13) ohne jedwede zuvor definierte Schnittstelle für die Dienstbereitstellung mitgeteilt werden.

9. Verfahren gemäß einem der vorstehenden Ansprüche, das einen Schritt des Modifizierens des angeforderten Diensts zu dessen Anpassung an eine Verwendung in dem Datennetzwerk auf der Grundlage von mittels des Protokolls mitgeteilten Informationen umfasst.

10. Verfahren gemäß einem der vorstehenden Ansprüche, wobei zumindest einer der Klienten (3) eine Anwendung umfasst, die für das Datennetzwerk (1) intern ist.

11. Verfahren gemäß einem der vorstehenden Ansprüche, wobei zumindest einer der Dienste einen Rufverwaltungsdienst enthält.

12. Verfahren gemäß einem der vorstehenden Ansprüche, wobei zumindest einer der Klienten (3) einen Endbenutzer des Datennetzwerks (1) umfasst.

13. Verfahren gemäß einem der vorstehenden Ansprüche, wobei die Dienste auf der Grundlage eines Modells bereitgestellt werden, das bezüglich eines durch die Parlay-Gruppe definierten Modells modifiziert ist.

14. Verfahren gemäß einem der vorstehenden Ansprüche, wobei eine Dienstermittlungsschnittstelle der Schnittstelleneinrichtung (2, 6) nach Angeboten von den externen Dienstanbietern sucht.

15. Verfahren gemäß Anspruch 14, wobei die Dienstermittlungsschnittstelle lediglich ausgewählte Angebote ermittelt.

16. Verfahren gemäß einem der vorstehenden Ansprüche, wobei die Schnittstelleneinrichtung (2, 6) eine Anfrage für einen Dienst zu zumindest einem externen Dienstanbieter (11 bis 13) sendet.

17. Verfahren gemäß Anspruch 16, wobei die Anfrage zu möglichen Dienstanbietern rundgesendet wird.

18. Verfahren gemäß einem der vorstehenden Ansprüche, wobei die Angebote von den externen Dienstanbietern in einer Registerfunktion registriert werden.

19. Verfahren gemäß einem der vorstehenden Ansprüche, wobei eine Abrechnungsschnittstelle (6) der Schnittstelleneinrichtung zur Unterzeichnung einer Dienstverwendungsübereinkunft verwendet wird.

20. Verfahren gemäß einem der vorstehenden Ansprüche, wobei die Schnittstelleneinrichtung eine Vielzahl von Anwendungsprogrammierschnittstellen umfasst.

21. Verfahren gemäß einem der vorstehenden Ansprüche, wobei das Datennetzwerk (1) zur Kommunikation von Paketdaten eingerichtet ist.

22. Verfahren gemäß einem der vorstehenden Ansprüche, wobei die Kommunikation in dem Datennetzwerk (1) auf dem Internetprotokoll, IP, basiert.

23. Verfahren gemäß einem der vorstehenden Ansprüche, wobei der Operator des Datennetzwerks (1) für die Verwendung von zumindest einem von dem zumindest einen externen Dienstanbieter (11 bis 13) angebotenen Dienst bezahlt.

24. Verfahren gemäß einem der vorstehenden Ansprüche, wobei eine Punkt-zu-Punkt-artige Verbindung auf der Grundlage von mittels des Protokolls mitgeteilten Informationen eingerichtet wird.

25. Dienstschnittstellenanordnung für ein Datennetzwerk (1), mit:
einer Schnittstelle (2, 6) zum Empfang von Informationen hinsichtlich Diensten, die von zumindest einem externen Dienstanbieter (11 bis 13) angeboten werden, wobei die Dienste zur Verwendung durch mit dem Datennetzwerk assoziierte Klienten (3) dienen,
einem Register (2, 6) für durch zumindest einen externen Dienstanbieter bereitgestellte Dienste,
einer Anforderungseinrichtung (2, 6) zur Verarbeitung einer Anforderung für einen Dienst durch einen Klienten, wobei die Anforderungseinrichtung zur Suche nach einem Dienst, der mit der Anforderung aus der Registereinrichtung übereinstimmt, und wenn ein übereinstimmender Dienst gefunden wird, zur Anforderung des Diensts von einem externen, den Dienst bereitstellenden Dienstanbieter (11 bis 13) eingerichtet ist, wobei die Anforderungseinrichtung zur Kommunikation mit dem externen Dienstanbieter auf der Grundlage eines Protokolls eingerichtet ist, das ein Ingangsetzen einer Dienstbereitstellung ermöglicht, wobei die Anordnung **dadurch gekennzeichnet ist, dass**:
sie zur Ermittlung von Diensten aus rundgesendeten Dienstwerbungsnachrichten eingerichtet ist, und **dadurch**, dass sie umfasst:
eine Auswahleinrichtung (2, 6) zur Auswahl von Diensten, die für die Klienten (3) verfügbar sein sollen, auf der Grundlage von durch zumindest einen Dienstanbieter (11 bis 13) rundgesendeten Angeboten, und
eine Übereinkunftseinrichtung (2, 6) zur Verarbeitung von Übereinkünften zwischen dem Datennetzwerk und dem zumindest einen externen, Angebote für Dienste rundsendenden Dienstanbieter (11 bis 13).

26. Dienstschnittstellenanordnung gemäß Anspruch 25, die eine Einrichtung (6) zur Verarbeitung von Authentifizierungsprozeduren zwischen dem Datenkommunikationsnetzwerk (1) und dem externen Dienstanbieter (11 bis 13) umfasst.

27. Dienstschnittstellenanordnung gemäß Anspruch 25 oder 26, wobei das Protokoll derart ist, dass die Dienstbereitstellung ohne ein Erfordernis des vorhergehenden Definierens von spezifischen Schnittstellen für die Dienstbereitstellung in Gang gesetzt werden kann.

28. Dienstschnittstellenanordnung gemäß einem der Ansprüche 25 bis 27, wobei als Protokoll eines der Folgenden ausgewählt wird: ein SitzungsingangsetzungsProtokoll, SIP; HyperText-Transfer-Protokoll, HTTP; Simple-Object-Activation-Protokoll, SOAP.

29. Dienstschnittstellenanordnung gemäß einem der Ansprüche 25 bis 28, wobei das Datennetzwerk (1) ein paketvermitteltes Datennetzwerk enthält.

30. Dienstschnittstellenanordnung gemäß einem der Ansprüche 25 bis 29, wobei die Schnittstelleneinrichtung (2) eine Vielzahl von Anwendungsprogrammierschnittstellen enthält.

31. Dienstschnittstellenanordnung gemäß einem der Ansprüche 25 bis 30, die zur Bereitstellung von zumindest einer der folgenden Schnittstellenfunktionen eingerichtet ist: Dienstverfügbarkeitsrundsendung, Dienstsuche, Dienstermittlung, Authentifizierung, Gebührenerfassung und/oder Abrechnung, Firewall, und/oder Gateway.

## Revendications

1. Procédé de fourniture de service pour des clients (3) associés à un réseau de communication de données (1), lesdits services étant fournis par au moins un fournisseur de service externe (11 à 13), et dans lequel les clients peuvent demander un service à partir d'une entité d'interface (2, 6), les requêtes étant traitées par l'entité d'interface pour trouver un service correspondant parmi des services enregistrés dans celle-ci, et si un service correspondant est découvert, ledit service est demandé depuis un fournisseur de service externe (11 à 13) fournissant ledit service en communiquant un message vers ledit fournisseur de service externe en fonction d'un protocole qui permet l'initialisation d'une session de fourniture de service, le procédé étant **caractérisé en ce qu'**il comprend les étapes consistant à :
diffuser depuis ledit au moins un fournisseur de service externe des offres qui s'associent à des services vers une entité d'interface (2, 6) associée avec le réseau de données ;
traiter les offres de diffusion au niveau de l'entité d'interface pour prendre une décision concernant l'acceptation des offres ;
comprendre des services acceptés dans le registre des services qui sont disponibles pour les clients (3) ; et
établir toutes les interfaces requises pour fournir la connexion de service en fonction des informations communiquées au moyen dudit protocole.

2. Procédé selon la revendication 1, dans lequel ledit protocole comprend un protocole d'ouverture de session, SIP.

3. Procédé selon la revendication 1, dans lequel ledit protocole comprend un protocole de transfert hypertexte, HTTP.

4. Procédé selon la revendication 1, dans lequel ledit protocole comprend un protocole d'activation d'objet simple, SOAP.

5. Procédé selon l'une quelconque des revendications précédentes, dans lequel ledit au moins fournisseur de service externe (11 à 13) offre les services en fonction dudit protocole.

6. Procédé selon l'une quelconque des revendications précédentes, dans lequel les offres sont diffusées pour être reçues par des entités d'interface d'au moins deux réseaux de données.

7. Procédé selon l'une quelconque des revendications précédentes, dans lequel une procédure d'authentification est accomplie entre l'entité d'interface (2, 6) du réseau de données (1) et le fournisseur de service externe (11 à 13).

8. Procédé selon la revendication 1, dans lequel lesdites informations sont communiquées entre l'entité d'interface (2, 6) et le fournisseur de service externe (11 à 13) sans aucune interface préalablement définie pour la fourniture de service.

9. Procédé selon l'une quelconque des revendications précédentes, comprenant une étape consistant à modifier le service demandé de manière à ce qu'il soit adapté pour être utilisé dans le réseau de données en fonction des informations communiquées au moyen dudit protocole.

10. Procédé selon l'une quelconque des revendications précédentes, dans lequel au moins un des clients (3) comprend une application qui est interne pour le réseau de données (1).

11. Procédé selon l'une quelconque des revendications précédentes, dans lequel au moins un des services comprend un service de gestion d'appel.

12. Procédé selon l'une quelconque des revendications précédentes, dans lequel au moins un des clients (3) comprend un utilisateur final du réseau de données (1).

13. Procédé selon l'une quelconque des revendications précédentes, dans lequel les services sont fournis en fonction d'un modèle qui est modifié à partir d'un modèle défini par le Groupe Parlay.

14. Procédé selon l'une quelconque des revendications précédentes, dans lequel une interface de découverte de service de l'entité d'interface (2, 6) contrôle les offres des fournisseurs de services externes.

15. Procédé selon la revendication 14, dans lequel l'interface de découverte de service découvre uniquement des offres sélectionnées.

16. Procédé selon l'une quelconque des revendications précédentes, dans lequel l'entité d'interface (2, 6) envoie une requête pour un service à au moins un fournisseur de service externe (11 à 13).

17. Procédé selon la revendication 16, dans lequel la requête est diffusée vers des fournisseurs de services possibles.

18. Procédé selon l'une quelconque des revendications précédentes, dans lequel les offres par les fournisseurs de services externes sont enregistrées dans une fonction de registre.

19. Procédé selon l'une quelconque des revendications précédentes, dans lequel une interface de chargement (6) de l'entité d'interface est utilisée pour la signature d'un accord d'utilisation de service.

20. Procédé selon l'une quelconque des revendications précédentes, dans lequel l'entité d'interface comprend une pluralité d'interfaces de programmation d'application.

21. Procédé selon l'une quelconque des revendications précédentes, dans lequel le réseau de données (1) est adapté pour communiquer des données en paquets.

22. Procédé selon l'une quelconques des revendications précédentes, dans lequel la communication dans le réseau de données (1) est basée sur le protocole Internet, IP.

23. Procédé selon l'une quelconque des revendications précédentes, dans lequel l'opérateur du réseau de données (1) paie pour l'utilisation d'au moins un service offert par ledit au moins fournisseur de service externes (11 à 13).

24. Procédé selon l'une quelconque des revendications précédentes, dans lequel une connexion de type point à point est établie en fonction des informations communiquées au moyen dudit protocole.

25. Agencement d'interface de service pour un réseau de données (1), comprenant :
une interface (2, 6) destinée à recevoir des informations concernant des services qui sont offerts par au moins un fournisseur de service externe (11 à 13), lesdits services étant destinés à être utilisés par des clients (3) associés au réseau de données ;
un registre (2, 6) pour des services fournis par au moins un fournisseur de service externe ;
des moyens de requête (2, 6) destinés à traiter une requête pour un service par un client, lesdits moyens de requête étant agencés pour rechercher un service qui correspond à la requête à partir du registre et, si un service correspondant est localisé, pour demander ledit service à partir d'un fournisseur de service externe (11 à 13) fournissant ledit service, dans lequel les moyens de requête sont agencés pour communiquer avec ledit fournisseur de service externe en fonction d'un protocole qui permet l'initialisation d'une fourniture de service, l'agencement étant **caractérisé en ce que**
il est agencé pour découvrir des services à partir de messages publicitaires de services diffusés, et **en ce qu'**il comprend
des moyens de sélection (2, 6) destinés à sélectionner des services devant être mis à disposition des clients (3) en fonction des offres diffusées par au moins un fournisseur de service (11 à 13) ; et
des moyens d'accord (2, 6) destinés à traiter les accords entre le réseau de données et ledit au moins un fournisseur de service externe (11 à 13) diffusant les offres de services.

26. Agencement d'interface de service selon la revendication 25, comprenant des moyens (6) pour traiter des procédures d'authentification entre le réseau de communication de données (1) et le fournisseur de service externe (11 à 13).

27. Agencement d'interface de service selon la revendication 25 ou 26, dans lequel le protocole est tel que la fourniture de service peut être initialisée sans qu'il soit nécessaire de définir préalablement des interfaces spécifiques pour ladite fourniture de service.

28. Agencement d'interface de service selon l'une quelconque des revendications 25 à 27, dans lequel ledit protocole est sélectionné pour être l'un des suivants : un protocole d'ouverture de session, SIP ; un protocole de transfert hypertexte, HTTP ; un protocole d'activation d'objet simple, SOAP.

29. Agencement d'interface de service selon l'une quelconque des revendications 25 à 28, dans lequel le réseau de données (1) comprend un réseau de données à commutation de paquets.

30. Agencement d'interface de service selon l'une quelconque des revendications 25 à 29, dans lequel l'entité d'interface (2) comprend une pluralité d'interfaces de programmation d'application.

31. Agencement d'interface de service selon l'une quelconque des revendications 25 à 30, adapté pour fournir au moins une des fonctions d'interface suivantes : diffusion de disponibilité de service ; consultation de service ; découverte de service ; authentification ; facturation et/ou imputation ; pare-feu ; et/ou passerelle.
